# EUROPEAN PATENT SPECIFICATION

(11) **EP 1 100 686 B1**
(45) Date of publication and mention of the grant of the patent: **01.10.2003**
(21) Application number: 99939385.3
(22) Date of filing: 20.07.1999
(51) Int. Cl.: B41M 5/24, B41M 5/26, B41M 5/36, B23K 26/18, B32B 15/08, B65D 65/38

(54) **METHOD FOR MARKING A LAMINATED FILM**
VERFAHREN ZUM BESCHRIFTEN EINES LAMINIERTEN FILMS
PROCEDE DE MARQUAGE DE FILM LAMINE

(30) Priority: 22.07.1998 EP 98113623
(43) Date of publication of application: 23.05.2001
(73) Proprietor: Novartis AG, 4056 Basel (CH); Novartis Pharma GmbH, 1230 Wien (AT)
(72) Inventor: JUX, Egbert, D-63814 Mainaschaff (DE); SCHROETER, Renata, D-63762 Grossostheim (DE); ZAHN, Dieter, D-63762 Grossostheim (DE)
(74) Representative: Grubb, Philip William
(86) International application number: EP9905175
(87) International publication number: WO00005078

(56) References cited:
- EP-A- 0 531 565
- EP-A- 0 644 047
- EP-A- 0 646 471
- WO-A-89/07302
- DE-C- 19 642 040
- DE-U- 29 716 186

## Description

The invention relates to a method for marking a laminated film material in a development according to the generic part of claim 1.

The use of laminated films as backing foils for blister packs is well-known in packaging technology. Such laminated films consist of a metallic base, such as aluminium, affixed to a plastic film, which is printed on the upper side and/or the side facing the metal foil, and a plastic film material on the underside that can be welded to a plastic container. Such laminated films are often also marked on the upper side with a variety of information, such as the expiry date, a lot number, and other marks identifying the contents of the pack. If the blister pack is to undergo various other process steps after sealing, such as sterilization by autoclaving, because the contents of the pack are for use in the field of medicine, for example, then it must be guaranteed that the marking on the upper side can withstand such treatment.

A thermal transfer printing process for marking blister packs which are subsequently exposed to sterilization is known, for example, from EP-0 646.471. The result of the marking, however, is not particularly satisfying, because it is too full of contrasts and cannot therefore be optimally coordinated with the packaging design. Furthermore, the process entails the consumption of a large quantity of material. Moreover, using present technology, the marking still has to be carried out on rolled material, i.e. on film which is generally wound around a roller, because it is not possible to a mark containers that are already sealed.

The invention addresses the problem of marking the upper side of a laminated film, especially for blister packs, in such a manner that the marking withstands subsequent process steps such as sterilization of the packaging and produces a result which is optically suitable. Furthermore, the marking process should take place on-line in a packaging plant and be characterized by minimal consumption of materials.

The invention solves this problem with the features indicated in claim 1. With regard to further substantial design features, reference is made to the dependent claims.

The use of laser enables the upper side of the film material to be furnished with marks which prove resistant to subsequent process steps, such as sterilization in particular, and retain their characteristics. As a result of the laser treatment, either the upper plastic film is changed thermally in such a manner that a visible colour change occurs, or the part of the surface treated with the laser beam is removed to produce the desired lettering. In the case of the latter subtractive procedure, the coloured top layer of the film is removed down to the metal substrate, which also serves as a buffer against the laser treatment, thus eliminating the risk of perforation. If a plastic is selected whose colour contrasts sharply with the metallic colour, then the film acquires a clearly visible marking which can be integrated much better into the visual identity of the packaging design than is possible with black-and-white printing. Because the underlying metal layer does not show any change when the packaging is treated in an autoclave, there is no impairment of the marking after such treatment. If a colour change of the upper plastic layer is to be achieved by laser, then generally a plastic film is used containing pigments whose colour changes on laser treatment. In every case, laser permits tha marking of containers that are already filled and sealed, because printing takes place on a non-contact basis with a relatively large distance between the marker and the sealing film, so that a smooth surface is not required.

Further details and advantages of the invention are apparent from the following description and drawings. The drawings show:

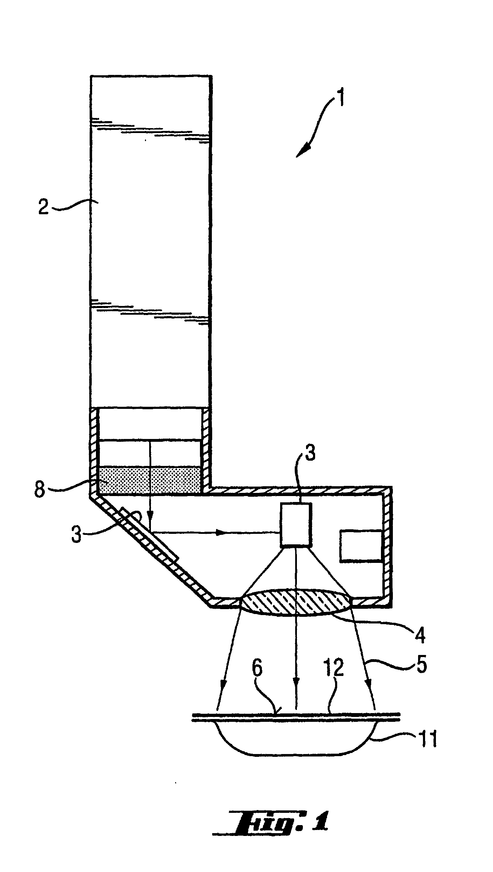

- Fig. 1: a schematic diagram of a laser marking unit and the printing of a film according to the invention;
- Fig. 2: a diagram of the integration of two laser marking units in a packaging plant;
- Fig. 3: a diagram of blister strips arranged alongside each other;
- Fig. 4: a schematic diagram of the control system for several laser marking units.

The invention discloses a method for making a laminated film 12 comprising at least a backing layer and a plastic film affixed to it by means of an adhesive layer, the method comprising removal and/or structurally visible modification of the plastic film by means of laser 2 and further comprising the laminated film 12 forming the backing foil of a blister pack 11 and being covered by a strip of the laminated film 12 and forming a blister strip 10. Laser marking unit 1 is designed for the marking of a laminated film, especially for a blister pack. Such a laminated film comprises a metallic substrate, typically of aluminium, affixed to a plastic film which is printed on the upper side and/or on the side facing the metal foil, and a plastic film material on the underside that can be welded to a plastic container. As a result of the laser treatment in the laser marking process, either the upper plastic film is changed thermally in such a manner that a visible colour change occurs, or the part of the surface treated with the laser beam is removed to produce the desired lettering. Laser marking unit 1 preferably comprises a laser 2, deflecting mirrors 3 and a flat field lens 4. High frequency-excited sealed-off CO₂ lasers without an external gas supply and having a wavelength of 10.6 µm are preferably used as laser source 2 for the subtractive marking procedure. Generally it can be assumed that the gas fill has a life of about 20000 operating hours. Because the laser is HF-pumped, there is no need for pumping flashlamps, such as are used for example with solid state lasers. For this reason, the costs are confined to the cost of energy consumption. For laser marking by means of a colour change in the upper plastic film, Nd:YAG laser is preferably used.

Laser beam 5 is expediently deflected by two rotating galvanometer mirrors 3. These operate in a closed loop with active stabilization of temperature. Because the mirrors 3 have only a very low mass which is moved, a high deflection rate and accurate path precision are possible. After deflection, the beam 5 is focused through a flat field lens 4 onto the operating level 6. Overall, as a result of this calibrated lens and mirror system 3, 4, the focus point of the laser 2 is moved in the operating plane 6. The flat field lens 4 preferably has a focal length of 200 mm, providing a sufficiently large working distance. A distortion of the laser beam 5 is excluded by virtue of the axial shift arrangement of the rotating galvanometer mirrors 3. The mirrors 3 are controlled by a card located in the computer. Furthermore, an integrated beam expander provides for a small diameter of the focus point with good depth of focus in the TEM₀₀-Mode. A small diameter of the focus point is important for the quality of the marking, especially if a large working field is envisaged. A favourable diameter of the focus point is 320 µm.

Because the writing head of the laser 2, comprising the deflecting mirrors 3 and the flat field lens 4, has a distance of 200 mm from the film surface 6 which is to be marked, a screening of the work space is necessary for safety reasons to protect against any interposition during the marking procedure. Owing to the wavelength of the laser 2 which is used, a plexiglass enclosure can be used for this purpose. This offers the advantage that the marking procedure can be inspected. In addition, the design includes an interruption device 8 for the laser beam 5, which is under electronic control and serves to interrupt the laser beam. It is activated when, for example, the protective doors of the enclosure are opened.

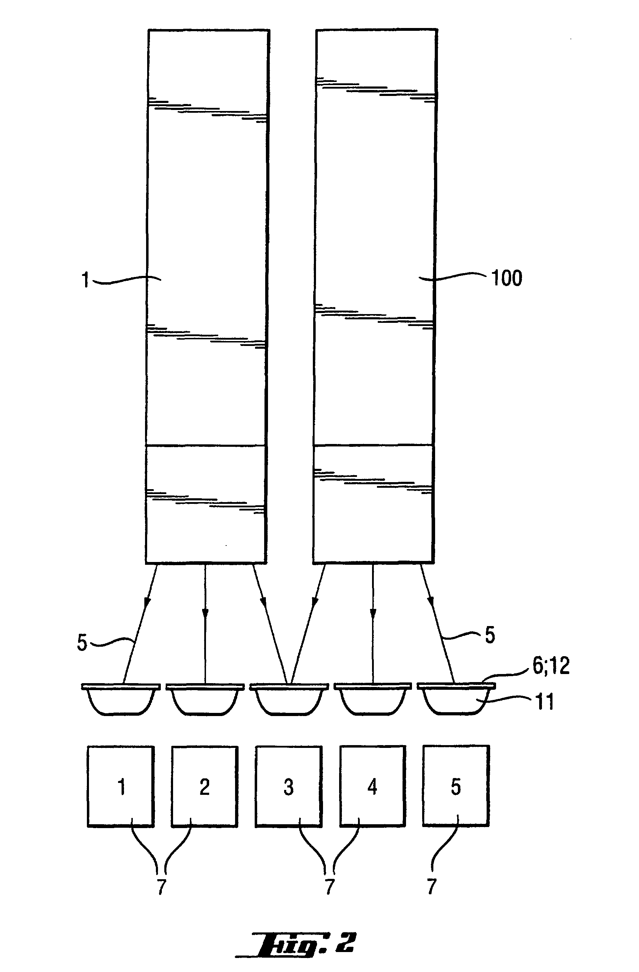

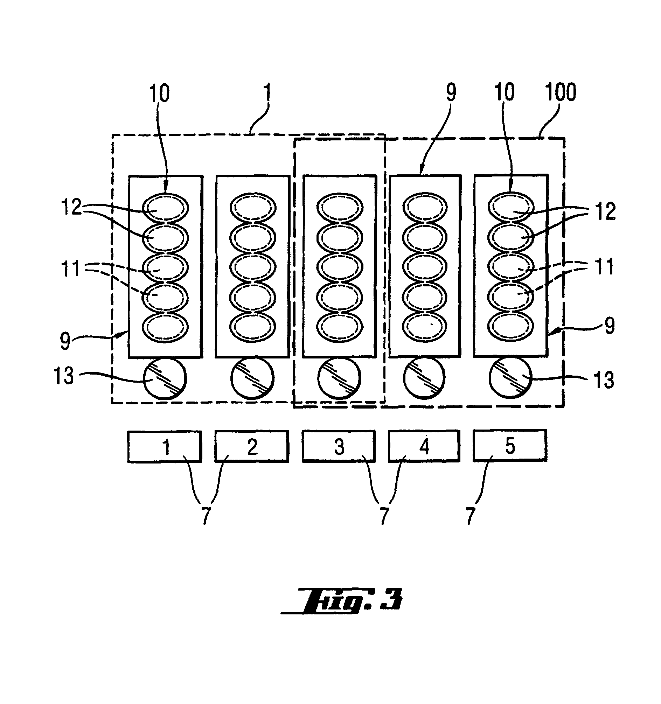

Laser marking unit 1 is preferably integrated into a packaging plant, so that the marking of the film is fully automatic, taking place directly on-line, ideally after the packaging container is sealed. Fig. 2 shows five production lines 7 of a packaging plant especially for contact lenses continually transporting the tool carriers 9 illustrated in Fig. 3, each of which is loaded with a blister strip 10. The blister strips 10 comprise five blister packs 11 arranged one behind the other, which are connected to one another by a film strip 12 corresponding in shape to the outline of the upper side of the blister packs 11, because film strip 12 is welded to the individual blister packs 11 after these have been filled with the object of the packaging, preferably a contact lens. To mark the upper side of film 12 of the blister strips 10, a stopper bar 13 fitted with sensors is envisaged, causing carrier 9 with the blister strips 10 to stop briefly so that they can be marked in a firm marking position by laser 2. Because the deflection of the laser beam 5 is not sufficient for the five lines 7 envisaged in the preferred embodiment and a shifting of laser marking unit 1 would be too complicated, it is intended that two laser marking units 1 and 100 should advantageously be integrated into the packaging plant wherein unit 1 provides marking for lines 1, 2 and 3 and unit 100 for lines 3, 4 and 5. Naturally it is also possible to design a package plant with only one laser or also with more than two lasers.

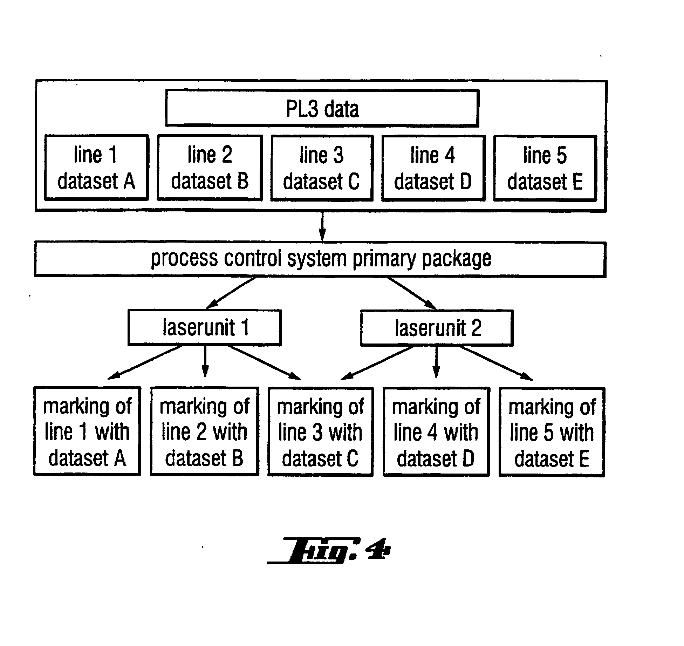

As shown in Fig. 4, the requisite marking data are fed by a process control system to the packaging plant and the laser marking units 1 and 100, the datasets possibly being different for each line 7. Within a single line 7, the dataset remains the same until new datasets are transmitted by the process control system. The marking of line 3 is carried out by the laser unit 1 or 100 which is the first to become free.

The waste which occurs during the marking procedure is advantageously discharged by an exhaust air system which is not described in further detail here.

The present laser printing process is particularly suitable for a blister package having a flexible laminate film cover, e.g., a blister contact lens package. An exemplary blister contact lens package is disclosed in U.S. Pat. No. 5,609,246 to Borghorst. In general, a blister package for a contact lens has a rigid blister container and a flexible laminate film cover that is thermally or adhesively attached to the opening of the blister package. The laminate cover is designed to be flexible such that the covering material can be easily handled when the laminate covering material is applied on the package during the production process and when the covering material is removed by the consumer. The laminate covering material has at least an outer thermoplastic layer and a backing layer. The outer thermoplastic layer is produced from a film-forming thermoplastic polymer, including polyolefin, e.g., polyethylene, polypropylene, polybutene and copolymers thereof; polyester, e.g., polyethylene terephthalate, polybutylene terephthalate and copolymers thereof; and polyvinyl chloride. The outer layer is a protective layer that provides a printable surface, and the backing layer provides moisture and gas barrier properties. Suitable materials for the backing layer include metals, e.g., aluminum; and thermoplastic polymers, e.g, polyolefin, polyester, polyvinyl chloride, polyvinyl alcohol or acrylonitrile polymer, although a metal is preferred. Preferably, the backing layer is produced from a material that has a higher thermal decomposition temperature than the thermoplastic of the upper layer. Additionally, the laminate covering material can have additional layers including a thermoplastic film inner layer, which is adjacently placed to the backing layer so that the inner layer can act as an adhesive layer that attaches the laminate film cover to the blister container. The flexible laminate film cover material can be provided as a roll that is suitably configured for an on-line printing process.

In general, a contact lens is produced, inspected and placed in a blister container along with an amount of an isotonic saline solution. Then the film cover, which has been cut to cover the opening and certain exposed portion of the blister container, is placed over the container and affixed or sealed, e.g., thermally, to the container around the opening. The present printing process is highly flexible printing process that can print the flexible film cover before or after it is cut from the roll and even after it is placed and affixed to the package. The present printing process is especially suitable for printing variable information, e.g., lot number, expiration date, power and the like, on the flexible film cover. One of advantages of the present process is that the laser printing process is a highly flexible and robust process that can impart clear and legible information even on a non-uniformly planar surface. This flexible nature of the present invention is highly important in that the flexible laminate cover tends to form a wavy surface and tends to buckle up unattached sections. Accordingly, conventional variable information printing processes, such as thermal transfer processes and ink-jet processes which require a flat surface to properly imprint, are not highly suitable for printing information after the cover is sealed on the container. In addition, since a contact lens package is sterilized, typically in an autoclave, after the cover is sealed to the container, the ink applied on the cover is subjected to a high temperature and humidity environment, which promotes thermal degradation of the applied ink and further impedes legibility of the printed information. In contrast, the present process does not use an ink system to impart information on the cover, and therefore, legibility of the printed information is not affected by the sterilization process. Accordingly, a preferred embodiment is that the laminate cover material is printed after the cover material is affixed to the package using the laser printing process.

In accordance with the present invention, the upper layer and the backing layer of the laminate covering material have a color contrast such that when a pattern of the upper layer is removed by the laser, the pattern is clearly visible. For example, when a blue pigment or dye is added to the thermoplastic formulation for the upper layer and an aluminum layer is used as the backing layer, a highly legible message can be imparted on the cover material by removing or ablating the upper layer to form a pattern of alphabets or a graphic design.

The marking results obtained using a CO₂-laser show that the marking of the film is characterized by a very high quality of lettering and resistance. The text is clearly legible and is distinguished by a high degree of resolution. The top coloured layer of the film is removed as far as the metal substrate, wherein it has been shown that, when aluminium is used as the substrate, this provides a good buffer for the laser treatment and no perforations occur during the process. Overall, the marking is of pleasing appearance and matches the packaging design well. Because the process is carried out on a non-contact basis with a relatively large distance between marker and sealing film, containers that are already filled and sealed can be marked without any problem in respect of clarity and resolution of the lettering. Moreover, the integration of a marking unit within a packaging plant has the advantage that the production process can be substantially more flexible. In addition, it has been shown that, after sterilization, the marking remains clearly legible and is not subject to changes.

## Claims

1. A method for marking a laminated film (12) comprising at least a backing layer and a plastic film affixed to it by means of an adhesive layer, the method comprising removal and/or structurally visible modification of the plastic film by means of laser (2), and further comprising the laminated film (12) forming the backing foil of a blister pack (11) and being firmly sealed with the blister pack (11), several blister packs (11) being covered by a strip of the laminated film (12) and forming a blister strip (10).

2. A method according to claim 1, comprising using five blister packs (11) forming the blister strip (10).

3. A method according to claim 1 or 2, comprising the laminated film (12) being marked by laser after sealing to the blister pack (11).

4. A method according to any one of claims 1 to 3, comprising sealing the laminated film (12) to the blister pack (11) and on-line marking of the laminated film (12) in a packaging plant.

5. A method according to claim 4, comprising providing a stopper bar (13) in the packaging plant to stop the blister packs (11) in a firm marking position.

6. A method according to claim 4 or 5, comprising the blister packs (11) being transported within the packaging plant in several lines (7) alongside one another.

7. A method according to claim 6, comprising providing two or more lasers in the packaging plant for the marking the laminated film (12) covering the blister packs (11) in the lines (7).

8. A method according to any one of claims 1 to 7, comprising using a plastic film material that contains pigments which change their colour on laser treatment.

9. A method according to any one of claims 1 to 8, comprising using a plastic film which is printed on the side facing away from the backing layer or on the side facing towards the backing layer.

10. A method according to any one of claims 1 to 9, comprising using a metallic film as the backing layer.

11. A method according to any one of claims 1 to 9, comprising using a thermoplastic polymer, e.g. polyolefin, polyester, polyvinyl chloride, polyvinyl alcohol or acrylonitrile polymer as the backing layer.

12. A method according to any one of claims 1 to 11, comprising using a CO₂-laser as laser (2).

13. A method according to claim 12, comprising using a CO₂-laser having a wavelength of λ = 10.6 µm and the focus point of the laser beam (5) having a diameter of 1000-100 µm, preferably of 320 µm.

14. A method according to any one of claims 1 to 11, comprising using a Nd:YAG-laser as laser (2).

15. A method according to any one of claims 1 to 12, comprising packaging an ophthalmic lens, especially a contact lens, in a blister pack (11).

## Patentansprüche

1. Verfahren zum Beschriften eines laminierten Films (12), der mindestens eine Trägerschicht und einen an dieser mittels einer Klebeschicht befestigten Kunststofffilm umfasst, wobei das Verfahren die Entfernung und/oder strukturell sichtbare Modifizierung des Kunststofffilms durch einen Laser (2) umfasst und ferner umfasst, dass der laminierte Film (12) die Trägerfolie einer Blisterpackung (11) bildet und fest mit der Blisterpackung (11) versiegelt wird, wobei mehrere Blisterpackungen (11) mit einem Streifen des laminierten Films (12) bedeckt werden und einen Blisterstreifen (10) bilden.

2. Verfahren nach Anspruch 1, welches die Verwendung von fünf Blisterpackungen (11) umfasst, die den Blisterstreifen (10) bilden.

3. Verfahren nach Anspruch 1 oder 2, welches umfasst, dass der laminierte Film (12) nach dem Versiegeln mit der Blisterpackung (11) mit einem Laser beschriftet wird.

4. Verfahren nach einem der Ansprüche 1 bis 3, welches das Versiegeln des laminierten Films (12) mit der Blisterpackung (11) und die prozessgekoppelte Beschriftung des laminierten Films (12) in einer Verpackungsanlage umfasst.

5. Verfahren nach Anspruch 4, welches das Bereitstellen einer Anschlagstange (13) in der Verpackungsanlage umfasst, um die Blisterpackungen (11) in einer festen Beschriftungsposition zu stoppen.

6. Verfahren nach Anspruch 4 oder 5, welches umfasst, dass die Blisterpackungen (11) innerhalb der Verpackungsanlage in mehreren Linien (7) längsseits zueinander transportiert werden.

7. Verfahren nach Anspruch 6, welches ferner die Bereitstellung von zwei oder mehr Lasern in der Verpackungsanlage für das Beschriften des laminierten Films (12), der in den Linien (7) die Blisterpackungen (11) bedeckt, umfasst.

8. Verfahren nach einem der Ansprüche 1 bis 7, welches die Verwendung eines Kunststofffilmmaterials umfasst, das Pigmente enthält, die ihre Farbe bei der Laserbehandlung ändern.

9. Verfahren nach einem der Ansprüche 1 bis 8, welches die Verwendung eines Kunststofffilms umfasst, der auf der Seite, die von der Trägerschicht abgewandt ist, oder auf der Seite, die der Trägerschicht zugewandt ist, bedruckt wird.

10. Verfahren nach einem der Ansprüche 1 bis 9, welches die Verwendung eines Metallfilms als Trägerschicht umfasst.

11. Verfahren nach einem der Ansprüche 1 bis 9, welches die Verwendung eines thermoplastischen Polymers, z.B. Polyolefin, Polyester, Polyvinylchlorid, Polyvinylalkohol oder Acrylnitril-Polymer, als Trägerschicht umfasst.

12. Verfahren nach einem der Ansprüche 1 bis 11, welches die die Verwendung eines CO₂-Lasers als Laser (2) umfasst.

13. Verfahren nach Anspruch 12, welches die Verwendung eines CO₂-Lasers mit einer Wellenlänge von λ = 10,6 µm umfasst, und wobei der Brennpunkt des Laserstrahls (5) einen Durchmesser von 1000 - 100 µm, vorzugsweise 320 µm, aufweist.

14. Verfahren nach einem der Ansprüche 1 bis 11, welches die Verwendung eines Nd:YAG-Lasers als Laser (2) umfasst.

15. Verfahren nach einem der Ansprüche 1 bis 12, welches das Verpacken einer ophthalmischen Linse, insbesondere einer Kontaktlinse, in einer Blisterpackung (11) umfasst.

## Revendications

1. Procédé de marquage d'un film laminé (12) comprenant au moins une couche de fond et un film plastique qui y est fixé au moyen d'une couche adhésive, le procédé comprenant l'élimination et/ou la modification structurellement visible du film plastique au moyen d'un laser (2), et comprenant en outre la réalisation du film laminé (12) pour former la feuille de fond d'un emballage en bulle (11), en étant fermement scellé sur l'emballage en bulle (11), plusieurs emballages en bulle (11) étant recouverts d'une bande du film laminé (11) et formant une bande (10) d'emballages en bulle.

2. Procédé suivant la revendication 1, comprenant l'utilisation de cinq emballages en bulle (11) formant la bande (10) d'emballages en bulle.

3. Procédé suivant la revendication 1 ou 2, comprenant le marquage du film laminé (12) au laser après le scellement à l'emballage en bulle (11).

4. Procédé suivant l'une quelconque des revendications 1 à 3, comprenant le scellement du film laminé (12) à l'emballage en bulle (11) et le marquage en temps réel du film laminé (12) dans une usine d'emballage.

5. Procédé suivant la revendication 4, comprenant la fourniture d'une barre d'arrêt (13) dans l'usine d'emballage pour arrêter les emballages en bulle (11) dans une position ferme de marquage.

6. Procédé suivant la revendication 4 ou 5, comprenant le transport des emballages en bulle (11) à l'intérieur de l'usine d'emballage sur plusieurs chaînes (7) les unes à côté des autres.

7. Procédé suivant la revendication 6, dans lequel on prévoit deux ou plusieurs laser dans l'usine d'emballage pour le marquage du film laminé (12) recouvrant les emballages en bulle (11) sur les chaînes (7).

8. Procédé suivant l'une quelconque des revendications 1 à 7, comprenant l'utilisation d'un matériau de film plastique qui contient des pigments changeant de couleur lors du traitement au laser.

9. Procédé suivant l'une quelconque des revendications 1 à 8, comprenant l'utilisation d'un film plastique qui est imprimé sur le côté situé à l'opposé de la couche de fond ou sur le côté faisant face à la couche de fond.

10. Procédé suivant l'une quelconque des revendications 1 à 9, comprenant l'utilisation d'un film métallique comme couche de fond.

11. Procédé suivant l'une quelconque des revendications 1 à 9, comprenant l'utilisation d'un polymère thermoplastique, par exemple un polymère de polyoléfine, de polyester, de chlorure de polyvinyle, d'alcool polyvinylique ou d'acrylonitrile comme couche de fond.

12. Procédé suivant l'une quelconque des revendications 1 à 11, comprenant l'utilisant d'un laser au CO₂ comme laser (2).

13. Procédé suivant la revendication 12, comprenant l'utilisation d'un laser au CO₂ ayant une longueur d'onde λ = 10,6 µm, le foyer du faisceau laser (5) ayant un diamètre de 1000-100 µm, de préférence de 320 µm.

14. Procédé suivant l'une quelconque des revendications 1 à 11, comprenant l'utilisation d'un laser Nd:YAG comme laser (2).

15. Procédé suivant l'une quelconque des revendications 1 à 12, comprenant l'emballage d'une lentille ophtalmique, en particulier d'une lentille de contact, dans un emballage en bulle (11).
